# EUROPEAN PATENT SPECIFICATION

(11) **EP 3 351 651 B1**
(45) Date of publication and mention of the grant of the patent: **05.01.2022**
(21) Application number: 15904040.1
(22) Date of filing: 14.09.2015
(51) Int. Cl.: C22F 1/10, F01D 5/28, F01D 25/00, C22F 1/00, B23P 15/04, F01D 5/18

(54) **TURBINE ROTOR BLADE MANUFACTURING METHOD**
TURBINENROTORSCHAUFELHERSTELLUNGSVERFAHREN
PROCÉDÉ DE FABRICATION D'AUBES DE ROTOR DE TURBINE

(43) Date of publication of application: 25.07.2018
(73) Proprietor: Mitsubishi Power, Ltd., Yokohama-shi, Kanagawa 220-8401 (JP)
(72) Inventor: OTA Atsuo, Yokohama-shi Kanagawa 220-8401 (JP); IMANO Shinya, Yokohama-shi Kanagawa 220-8401 (JP)
(74) Representative: Strehl Schübel-Hopf & Partner
(86) International application number: PCT/JP2015/076024
(87) International publication number: WO 2017/046851

(56) References cited:
- EP-A1- 2 963 135
- WO-A1-2008/072303
- WO-A1-2015/008343
- JP-A- H11 114 662
- JP-A- 2010 235 985
- US-A- 5 366 344

## Description

### Technical Field

The present invention relates to a manufacturing method of a turbine rotor blade.

### Background Art

Efficiency in a thermal power plant is required to increase toward the realization of a low carbon society. A gas turbine is effective for renewable energy that is an unstable supply power source because it has a high load following capability. Further, a combined cycle enabling a high efficiency by using a high exhaust temperature and being combined with a steam turbine is put into practical use and a growing demand is anticipated.

A rotor blade that is one of the constituent components of a gas turbine can increase efficiency by increasing an annulus area, for example, by expanding a blade length. A centrifugal stress increases with the increase of a blade length however and hence, in the case of a conventional Ni-based precision cast blade, the tensile strength is insufficient particularly at the root part of a later stage rotor blade. In recent years, a high-strength Ni-based forged material having a creep service temperature equivalent to an Ni-based precision cast material and a tensile strength of not less than 1.5 times is developed and is increasingly put into practical use for aircraft engine disks in Europe. A high-strength Ni-based forged material has been limited to the manufacturing of a small product because of a high high-temperature strength and a low workability but the workability has been improved dramatically by using the technology described in Patent Literature 1 stated below. As a result, a high-strength Ni-based forged alloy can be applied to a gas turbine rotor blade and the expansion of a blade length is expected.

Rise of a combustion temperature is effective for the increase of efficiency. The service temperature of a rotor blade also rises accordingly and hence a cooling function is required to be added. In general, a cooling method of cooling a blade from the interior by forming a hollow structure in the blade and feeding a cooling medium is adopted. A serpentine cooling flow passage having a 180-degree bent part is adopted or a rib structure is added in order to increase a cooling efficiency. In a precision cast blade, an intricate cooling flow passage is formed by casting molten metal in the state of installing a core having the shape of a cooling flow passage in a mold and removing the core after the metal is solidified. In the case of a forged blade, however, a cooling flow passage has to be formed after the blade is formed and hence only a structure of piercing a hole in one direction from the root part toward the apex part of the blade can be formed by simple machining or electrical discharge machining. Consequently, the degree of freedom in design is low and a high cooling efficiency cannot be realized.

In Patent Literature 1, with regard to a high-strength Ni-based forged alloy in which a γ' phase that is a precipitation strengthening phase precipitates by 36% to 60% by volume, workability improves by increasing the proportion of a γ' incoherent phase that does not contribute to strengthening during working.

In Patent Literature 2, disclosed is a manufacturing method of an Ni-based super heat-resistant alloy including the processes of: preparing a hot working material having a composition comprising, by mass, 0.001% to 0.05% C, 1.0% to 4.0% Al, 4.5% to 7.0% Ti, 12% to 18% Cr, 14% to 27% Co, 1.5% to 4.5% Mo, 0.5% to 2.5% W, 0.001% to 0.05% B, and 0.001% to 0.1% Zr, with the balance consisting of Ni and impurities; heating the hot working material by retaining it at least for 2 hours in the temperature range of 1,130°C to 1,200°C; cooling the hot working material heated at the heating process to a temperature of not higher than a hot working temperature at a cooling rate of not higher than 0.03°C/sec; and applying hot working to the hot working material after the cooling process. Hot workability is considered to be improved by the method.

A diffusion bonding method for Ni-based cast alloys is disclosed in JP H11 114 662 A. Working and heat treatment methods for Ni-based forged alloys are disclosed in WO 2015/008 343 A1.

### Citation List

### Patent Literature

PTL 1: International Publication WO 2015/008343
PTL 2: Japanese Patent No. 5652730

### Summary of Invention

### Technical Problem

Patent Literature 1 describes a turbine rotor blade as an example but does not provide a concrete manufacturing method of a rotor blade. Further, Patent Literature 2: is a literature on a method of improving the workability of a high-strength Ni-based forged alloy; is specialized in manufacturing a billet of an alloy having a certain limited composition by improving the hot forgeability; and does not provide a manufacturing method of a turbine rotor blade similarly to Patent Literature 1.

In view of the above circumstances, the present invention, in a manufacturing method of a turbine rotor blade using an Ni-based forged alloy, provides a manufacturing method of a turbine rotor blade having an excellent workability and a high degree of freedom in the design of a cooling structure.

### Solution to Problem

In order to solve the problem, the present invention suggests the manufacturing method of a turbine rotor blade as defined in Claim 1. Further advantageous features are set out in the dependent claims.

### Advantageous Effects of Invention

The present invention, in a manufacturing method of a turbine rotor blade using an Ni-based forged alloy, makes it possible to provide a manufacturing method of a turbine rotor blade having an excellent workability and a high degree of freedom in the design of a cooling structure.

### Brief Description of Drawings

Fig. 1 is a sectional view schematically showing a process in a manufacturing method of a turbine rotor blade according to the present invention.
Fig. 2 is a flowchart showing a manufacturing method of a turbine rotor blade according to the present invention.
Fig. 3 is a view schematically showing temperature profiles and material structure in a softening process.
Fig. 4 is a flowchart explaining the processes S21 to S23 in Fig. 2.

### Description of Embodiments

Embodiments according to the present invention are hereunder explained in detail. The present invention, however, is not limited to the embodiments addressed here and can be combined or modified appropriately in the range not changing the tenor.

### [Basic concept of the present invention]

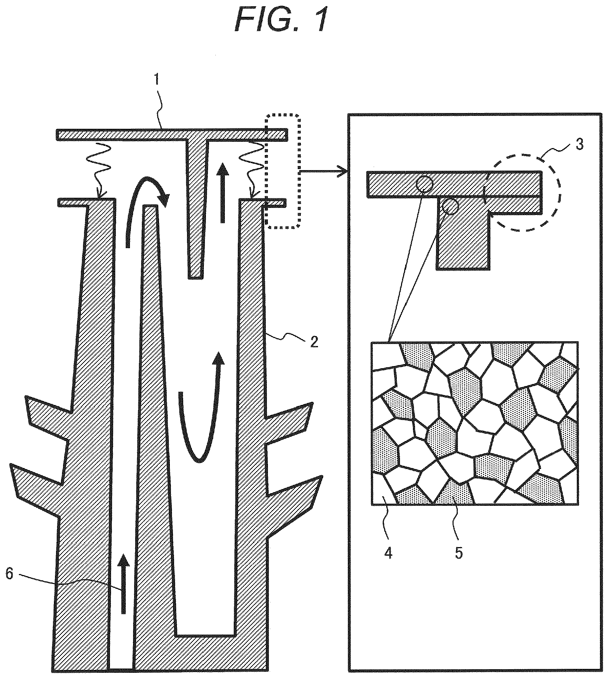

Fig. 1 is a sectional view schematically showing a process in a manufacturing method of a turbine rotor blade according to the present invention. The present inventors have earnestly studied a manufacturing method of a turbine rotor blade (hereunder referred to also as an "Ni-based forged blade") capable of attaining the above object. As a result, the present inventors have found that an intricate cooling structure can be formed in a blade interior through the following manufacturing process. That is, the workability of an Ni-based forged material is improved by increasing the quantity of a γ' phase 5 incoherent with a γ phase 4 and then at least two members (members 1 and 2 in Fig. 1) constituting a turbine rotor blade are formed. Then, after cooling structural parts acting as cooling flow passages (cooling structures) of a cooling fluid 6 are formed in the respective members, the respective members are joined. According to the manufacturing method, an intricate cooling structure can be formed in the interior of a forged blade without generating working cracks even in the case of an Ni-based forged alloy containing a γ' phase of not less than 10% to not more than 40% by mole at not lower than 1,050°C and having a high high-temperature strength. The present invention is established through the findings.

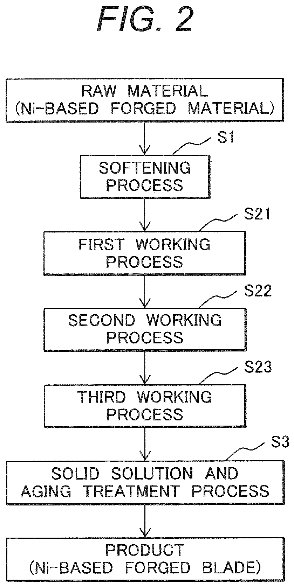

Fig. 2 is a flowchart showing a manufacturing method of a turbine rotor blade according to the present invention. As stated earlier, a manufacturing method of an Ni-based forged blade according to the present invention includes a softening process (S1) of softening an Ni-based forged material (Ni-based forged alloy) that is a raw material, a first working process (S21) of manufacturing at least two members constituting the Ni-based forged blade from the raw material after softened (softened material), a second working process (S22) of forming precursors (cooling structural parts) of a cooling flow passage in the members after the first working process, and a third working process (S23) of joining and integrating a first member and a second member after the second working process and forming a turbine rotor blade (hereunder referred to also as a "rotor blade" or "Ni-based forged blade") that is a product. The present invention includes the processes S1, S21, S22, and S23 as essential. A solid solution and aging treatment process (S3) for strengthening a rotor blade in a softened state may be applied after the process S23. The respective processes are hereunder explained in detail in reference to drawings.

### (S1: Softening process)

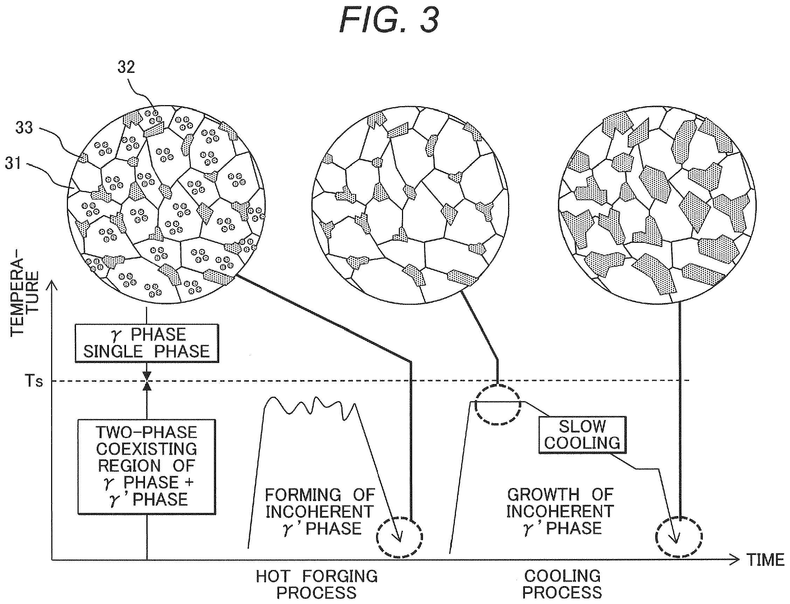

Fig. 3 is a view schematically showing temperature profiles and material structure in the process S1. As shown in Fig. 3, the process S1 includes a hot forging process and a cooling process. First, the hot forging process is explained. In the hot forging process, a γ′ phase incoherent with a γ phase precipitates over the grain boundary of the γ phase by hot-forging an Ni-based forged material at a temperature of not higher than a temperature at which the γ′ phase disappears (solid solution temperature Ts of a γ′ phase) and not lower than a temperature at which the recrystallization of the γ phase advances rapidly. Here, in the present invention, "over the grain boundary of a γ phase" means "a boundary between adjacent γ crystal grains".

The ground of a hot-forging temperature is shown hereunder. A y/y' phase coherent interface contributes to γ' phase precipitation strengthening that is the major strengthening mechanism of an Ni-based alloy and strengthening capability disappears by making the y/y' coherent interface incoherent. At the hot-forging process, hot forging is applied at a temperature of not higher than the solid solution temperature of a γ' phase and not lower than a temperature at which the recrystallization of a γ phase advances rapidly in order to precipitate a γ' incoherent phase. The solid solution temperature of a γ' phase in a raw material used in the present invention is most desirably not lower than 1,050°C. The effects of the present invention are obtained even when the solid solution temperature of a γ' phase is 1,000°C to 1,050°C, but a γ' incoherent phase hardly precipitates at not higher than 1,000°C and cannot precipitate at not higher than 950°C, and hence the effects of the present invention cannot be obtained. Further, when the solid solution temperature of a γ' phase comes close to the melting point of an Ni-based alloy raw material, cracking is generated during working by partial dissolution or the like and hence the solid solution temperature of a γ' phase is desirably lower than 1,250°C.

A hot-forging temperature has to be not lower than a temperature at which the recrystallization of a γ phase advances rapidly as stated earlier. More specifically, a hot-forging temperature is desirably not lower than 1,000°C and more desirably not lower than 1,050°C. When a hot-forging temperature is lower than 950°C, a γ' incoherent phase cannot precipitate and the effects of the present invention are not obtained.

Successively, a cooling (slow cooling) process is explained. At the cooling process, a softened state is realized by: slowly cooling a raw material in which a γ' incoherent phase 33 precipitates at a cooling rate of not higher than 50°C/h from a temperature of not lower than a hot-forging temperature; increasing (growing) the γ' incoherent phase 33 not contributing to strength; and thus increasing the quantity of the precipitated γ' phase 33. In a raw material immediately after hot forging, in addition to a γ' incoherent phase 33, a γ' coherent phase 32 also precipitates while the raw material cools from a hot-forging temperature to room temperature. At the cooling process therefore, a dual phase structure comprising a γ phase 31 and a γ' incoherent phase 33 has to be formed by raising a temperature to a temperature not lower than the hot-forging temperature of a raw material and thus dissolving a γ' coherent phase 32. A temperature before slow cooling at the cooling process therefore is desirably a temperature of not lower than the hot-forging temperature of a raw material and not higher than the solid solution temperature of a γ' phase.

The ground of a cooling rate at a cooling process is shown hereunder. By slowly cooling a raw material from a temperature of not lower than a hot-forging temperature, the precipitation driving force of a γ' coherent phase 32 lowers and hence a γ' incoherent phase 33 increases. Consequently, a γ' incoherent phase 33 can grow more as a cooling rate lowers and a cooling rate is desirably not higher than 50°C/h and more desirably not higher than 10°C/h.

The ground of a cooling end temperature is shown hereunder. By increasing a γ' incoherent phase 33 by applying slow cooling up to a temperature of not higher than working temperatures at the working processes S21 to S23 described later, a γ' coherent phase 32 can be inhibited from precipitating at the working temperatures. Further, the precipitation driving force of a γ' coherent phase 32 lowers as a temperature lowers and precipitation occurs scarcely at not higher than 500°C. A slow cooling end temperature at the cooling process therefore is desirably not higher than the working temperatures of the latter steps and more desirably not higher than 500°C. Through the softening process explained above, a raw material for a rotor blade softens and comes to be in the state of good workability.

### (S21: First working process)

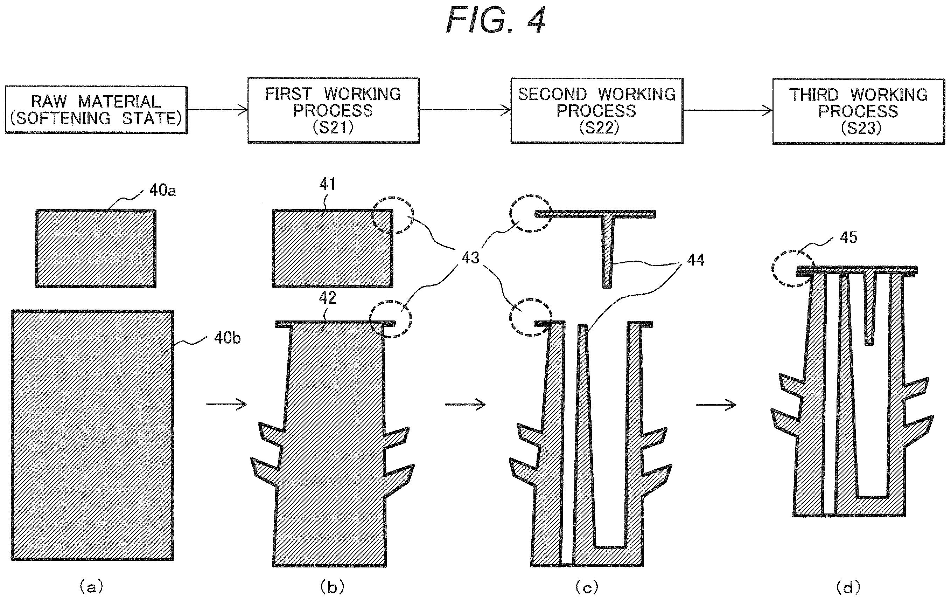

Successively, an Ni-based softened material that has come to a softened state at the above softening process is processed. Fig. 4 is a flowchart explaining the processes S21 to S23 in Fig. 2. First, at the first working process (S21), Ni-based softened materials 40a and 40b ((a) in Fig. 4) are processed to form the shapes ((b) in Fig. 4) of at least two members constituting a rotor blade. In (b) of Fig. 4, a rotor blade is divided into the two members of a member 41 acting as the apex part (top end part) of the rotor blade and a member 42 constituting a blade part (part other than the apex part) of the rotor blade and the two members are processed into respective shapes. On this occasion, as shown by (d) in Fig. 4, joining parts 43 to be the joints of the respective members are formed in the members 41 and 42 at the third working process (S23) described later. The working at the first working process is not particularly limited and can be machining, hot forging (die forging), or both of them.

The joining parts 43 are formed preferably at places where a rotor blade is scarcely affected during joining. When friction stir welding described later is used for the joining of the members in particular, a large load is applied during the joining and hence the joining parts 43 are formed preferably so that a large pressure may not be applied to the parts other than the joining places of the rotor blade. As shown by (b) and (c) in Fig. 4, desirably, protrusions are formed at the ends of the members and the protrusions are used as a joint 45.

### (S22: Second working process)

After the first working process, a second working process (S22) of forming cooling structural parts 44 that come to be the precursors of a cooling flow passage in the respective members is carried out. The working at the second working process is not particularly limited and predetermined shapes can be formed by using drilling, electrical discharge machining, or both of them. A burr formed on this occasion is removed because it can be a progress point of a crack in a rotator including a rotor blade.

By forming a structure shown by (c) in Fig. 4 as cooling structural parts 44, for example, after a third working process (S23) described later, a serpentine flow passage in which a cooling flow passage bends at an angle of 180 degrees can be formed. Further, film cooling is also possible by forming a hole at a side face of a blade by drilling.

### (S23: Third working process)

A third working process of joining the respective members is carried out after the second working process. As the joining, friction stir welding is required. As shown by (d) in Fig. 4, the joining parts 43 formed at (c) in Fig. 4 are joined and form a joint 45. As a result, a desired cooling structure (cooling flow passage) is formed by combining the cooling structural parts of the members.

The ground that friction stir welding is required is shown hereunder. In general, an Ni-based alloy containing many alloying elements is hardly weldable but, by friction stir welding, can be joined while a joint does not dissolve and a uniform forged structure is retained. As a result, the alloy can be welded without lowering the strength of a joint.

### (S3: Solid solution and aging treatment process)

A high-temperature strength can be recovered by applying solid solution and aging treatment of dissolving a γ' incoherent phase and reprecipitating a γ' coherent phase after the third working process. In the present invention, the conditions of solid solution treatment and aging treatment are not particularly limited and generally used conditions can be applied. A γ' coherent phase is contained desirably by not less than 30% by mole at 700°C after a solid solution and aging treatment process. As long as the content of a γ' coherent phase is not less than 30% by mole, an Ni-based forged blade having an adequate high-temperature strength can be obtained.

As stated earlier, a cooling structure has heretofore been formed with one member by machining or electrical discharge machining but only a cooling structure of piercing through in one direction from the root part toward the apex part of a blade has been able to be manufactured by this method. According to the present invention, since a rotor blade is manufactured by softening an Ni-based alloy firstly, preparing a plurality of members constituting the rotor blade, forming cooling structural parts in the members, and then assembling the members, a cooling structure of an intricate shape (meandering flow passage) that has heretofore been impossible when a rotor blade is manufactured from one member can be formed. Further, since a uniform forged structure can be retained even after joining by using friction stir welding when members are joined, a rotor blade can be manufactured without lowering the strength of an Ni-based forged material.

Although a manufacturing method of a rotor blade for a gas turbine has heretofore been explained as an embodiment according to the present invention, the method is not limited to a gas turbine and can appropriately apply also to another product in the range not changing the tenor. As an example, the method can be applied also to a rotator including a rotor blade of a compressor or a steam turbine.

### Examples

Examples according to the present invention are explained hereunder.

### (1) Manufacturing of turbine rotor blades of Examples 1 to 3 and Comparative materials 1 to 4

Test materials (Examples 1 to 3 and Comparative materials 1 to 4) are manufactured by using raw materials having the compositions shown in Table 1 and carrying out a softening process (S1) to a solid solution and aging treatment process (S3), those being stated earlier. The test materials are evaluated by the methods shown in Table 2. Evaluation results are represented by the symbols "o", "Δ", and "x" and the evaluation criteria are described in Table 3. In the manufacturing of the test materials, the raw materials are obtained by dissolving 50 kg each of the alloys having the compositions shown in Table 1 by using vacuum induction melting, applying homogenization treatment, and successively hot-forging the alloys at 1,050°C to 1,250°C. The evaluation results of the test materials are shown in Table 4.

**[Table 1]**

| | **Ni** | **Cr** | **Co** | **Mo** | **W** | **Ti** | **Al** | **C** | **B** | **Zr** | **Nb Fe** | | **Hf** | **Re** | **Ta** |
|---|---|---|---|---|---|---|---|---|---|---|---|---|---|---|---|
| Example 1 | **Bal.** | **15.6** | **8.4** | **3.0** | **2.6** | **3.5** | **2.3** | **0.01** | **0.01** | **0.03** | **1.1** | **3.9** | -- | **--** | -- |
| Example 2 | **Bal.** | **13.4** | **25.2** | **2.8** | **1.3** | **5.9** | **2.5** | **0,02** | **0.01** | **0.04** | -- | -- | -- | -- | -- |
| Example 3 | **Bal.** | **16.0** | **15.1** | **3.0** | **1.3** | **5.3** | **2.5** | **0.01** | **0.02** | **0.03** | **0.00** | **0.15** | **--** | **--** | **-**- |
| Comparative material 1 | **Bal.** | **19.8** | **19.0** | **5.9** | **-**- | **2.2** | **0.5** | **0.05** | **-**- | **-**- | **-**- | **0.7** | **-**- | **-**- | **--** |
| Comparative material 2 | **Bal.** | **19.0** | **12.1** | **6.2** | **1.0** | **2.9** | **2.0** | **0.03** | **-**- | **-**- | **--** | -- | **-**- | **-**- | **--** |
| Comparative material 3 | **Bal.** | **13.1** | **24.8** | **2.9** | **1.2** | **6.0** | **2.4** | **0.02** | **0.02** | **0.05** | **-**- | **-**- | -- | **-**- | **-**- |
| Comparative material 4 | **Bal.** | **7.0** | **1.1** | **0.8** | **8.9** | **-**- | **4.7** | **0.05** | **0.01** | **-**- | **0.75** | **-**- | **0.25** | **1.5** | **8.8** |

**[Table 2]**

| | Evaluation 1: γ' phase quantity in raw material at 1,050°C | Evaluation 2: Hardness after softening process (S1) | Evaluation 3: Workability during first working process (S21) | Evaluation 4: Workability during second working process (S22) | Evaluation 5: Workability during third working process (S23) | Evaluation 6: γ' phase quantity after solid solution and aging treatment process (S3) |
|---|---|---|---|---|---|---|
| Evaluation method | Calculation based on thermodynamic calculation | A raw material is heated to a forging temperature (1,050°C to 1 ,250° C), successively retained for one hour, successively cooled slowly to 500° C at 10°C/h, successively water-cooled, and extracted. | (1) Die forging is carried out at 950°C and successively pads are removed by machining. (2) When die forging cannot be carried out, pads are removed by machining. (3) When both die forging and machining are impossible, the evaluation finishes. | (1) Cooling structural parts are formed at a blade part and an apex part by drilling. (2) When drilling is impossible, cooling structural parts are formed at a blade part and an apex part by electrical discharge machining. | (1) A blade part and an apex part are joined by friction stir welding. (2) When friction stir welding is impossible, the evaluation finishes. | A γ' phase quantity is calculated by observing a texture retained at 700° C for 16 hours after retained at 1,050° C to 1,150°C for 4 hours. |

**[Table 3]**

| Evaluation | Evaluation 1: γ' phase quantity in raw material at 1,050°C | Evaluation 2: Hardness after softening process (S1) | Evaluation 3: Workability during first working process (S21) | Evaluation 4: Workability during second working process (S22) | Evaluation 5: Workability during third working process (S23) | Evaluation 6: γ' phase quantity after solid solution and aging treatment process (S3) |
|---|---|---|---|---|---|---|
| ○ | 10 [mol%] or more | Hardness not higher than 350 Hv | Die forging and machining: possible | Electrical discharge machining and drilling: possible | Friction stir welding: possible | A γ' phase at 700° C is not less than 30% bv mole |
| Δ | 0 to 10 [mol%] | Hardness 350 to not higher than 400 Hv | Die forging: impossible, machining: possible | Electrical discharge machining: possible, drilling: impossible | - | - |
| × | 0 [mol%] | Hardness not lower than 400 Hv | Working: difficult | Working: difficult | Friction stir welding: impossible | A γ' phase at 700° C is not more than 30% bv mole |

**[Table 4]**

| | Evaluation 1: γ' phase quantity in raw material at 1,050°C | Evaluation 2: Hardness after softening process (S1) | Evaluation 3: Workability during first working process (S21) | Evaluation 4: Workability during second working process (S22) | Evaluation 5: Workability during third working process (S23) | Evaluation 6: γ' phase quantity after solid solution and aging treatment process (S3) |
|---|---|---|---|---|---|---|
| Example 1 | ○ | ○ | ○ | ○ | ○ | ○ |
| Example 2 | ○ | ○ | ○ | ○ | ○ | ○ |
| Example 3 | ○ | ○ | ○ | ○ | ○ | ○ |
| Comparative material 1 | × | ○ | ○ | ○ | ○ | × |
| Comparative material 2 | Δ | Δ | Δ | Δ | × | |
| Comparative material 3 | ○ | Not carried out | × | | | |
| Comparative material 4 | ○ | | | | | |

### (2) Evaluation 1: Evaluation of γ' phase quantity in raw material at 1,050°C

A γ' phase quantity in a raw material at 1,050°C is calculated on the basis of thermodynamic calculation. In each of Examples 1 to 3 and Comparative materials 3 and 4, a γ' phase of not less than 10% by mole exists thermodynamically stably at 1,050°C. In Comparative material 1, no γ' phase exists because the solid solution temperature of a γ' phase is not higher than 1,050°C. In Comparative material 2, a γ' phase exists at 1,050°C but is not more than 10% by mole. In Comparative material 4, however, a γ' phase quantity exceeds 40% by mole at 1,050°C, a large crack is caused during the process of making a forged material by forging a raw material in the evaluation after the process S1 described later, and hence the evaluation is finished. In this way, since a raw material can hardly be forged when a γ' phase quantity at not lower than 1,050°C exceeds 40% by mole, a γ' phase quantity is desirably not more than 40% by mole.

### (3) Evaluation 2: Evaluation of hardness after softening process (S1)

Each of the test materials is heated to a forging temperature (1,050°C to 1,250°C), then water-cooled after slowly cooled to 500°C at 10°C/h, and extracted. Successively, a test piece 0.5 to 1.0 mm in size is taken out from an end of the test material and a hardness is measured with a micro Vickers hardness tester.

Examples 1 to 3 and Comparative material 1 are not higher than 350 Hv respectively. Comparative material 2 shows a hardness of 350 to 400 Hv. With respect to Comparative material 3, the softening process (S1) is not carried out and the first working process (S21) of the latter step is carried out. As a result of observing a structure on this occasion with a scanning electron microscope, it is confirmed that, in each of Examples 1 to 3, a dual phase structure comprising a γ phase and a γ' incoherent phase is formed. In each of Comparative materials 1 and 2, a γ' incoherent phase is not recognized and a γ' coherent phase precipitates. In Comparative material 1, since a forging temperature is set at a temperature not lower than the solid solution temperature of a γ' phase, a γ' incoherent phase does not precipitate and the effects of the present invention are not obtained. In Comparative material 2, although a forging temperature is not lower than the solid solution temperature of a γ' phase, the γ' phase quantity at 1,050°C evaluated in Evaluation 1 is small and the effects of the present invention are presumably not obtained sufficiently. In Comparative material 3, both a γ' incoherent phase and a γ' coherent phase precipitate. This is because a γ' incoherent phase precipitates while a raw material is forged before the softening process (S1) and successively a γ' coherent phase precipitates during the process of cooling the raw material to room temperature.

### (4) Evaluation 3: Evaluation of workability during first working process (S21)

At the first working process, firstly members acting as an apex part and a blade part of a rotor blade are manufactured by applying die forging at 950°C. A case where a load of press is insufficient during forging and a test material does not deform or a case where a defect such as a crack is generated in the interior or on the surface of a test material after forging is judged as not workable. With regard to machining, a case where a tool wears significantly or a defect is generated during working is judged as not workable.

Each of Examples 1 to 3 and Comparative material 1 can be worked by both die forging and machining. Comparative material 1 is workable because the quantity of a γ' phase is small and strength is low although a γ' incoherent phase does not precipitate at the softening process S1 and the softening process in the present invention does not contribute. In Comparative material 2, machining is possible but die forging is impossible. Further, in Comparative material 3, both die forging and machining are impossible. This is because Comparative material 3: is a high-strength material in which the solid solution temperature of a γ' phase is not lower than 1,050°C; precipitates a γ' coherent phase during working because a softening process is not applied; and is in the state of low workability. For the reason, the softening process S1 has to be applied in order to obtain good workability when a thermodynamically stable Ni-based alloy containing a γ' phase of not less than 10% by mole at not lower than 1,050°C is subjected to die forging and machining.

### (5) Evaluation 4: Evaluation of workability during second working process (S22)

At the second working process, firstly a cooling structural part is formed in a test material at room temperature by drilling. On this occasion, a case where a tool wears significantly or a defect is generated during working is judged as not workable, in the same manner as Evaluation 3. Electrical discharge machining can be applied because all the test materials are made of metal.

Each of Examples 1 to 3 and Comparative material 1 can be worked by both the methods of drilling and electrical discharge machining. In Comparative material 1, workability is good but the strength of the raw material itself is low as stated earlier and hence the softening process in the present invention does not contribute. In Comparative material 2, drilling is impossible but electrical discharge machining is possible.

### (6) Evaluation 5: Evaluation of workability during third working process (S23)

At the third working process, an apex part and a blade part are joined by friction stir welding. A case where a tool cannot be pushed into a test material, a case where a tool wears or breaks significantly during working, or a case where a defect, a specific harmful phase, or the like is recognized in an interior at a joint is judged as joining is impossible.

In each of Examples 1 to 3 and Comparative material 1, joining is possible and, by observation with a microscope, a defect and the like are not recognized at a joint and a fine polycrystalline structure is observed. That is, a uniform forged structure is observed in a whole rotor blade including a joint. In Comparative material 2, a tool cannot be pushed in and joining is impossible.

### (7) Evaluation of γ' phase quantity after solid solution and aging treatment process (S3)

Solid solution and aging treatment is carried out under a standard heat treatment condition of each test material and the quantity of a precipitated γ' coherent phase is calculated by succeeding structure observation and image analysis. In each of Examples 1 to 3, a γ' coherent phase of not less than 30% by mole precipitates at 700°C and a rotor blade having an adequate high-temperature strength can be obtained. In Comparative material 1, a γ' phase quantity is not more than 30% by mole at 700°C.

From the above results, it is verified that the present invention makes it possible, in a manufacturing method of a turbine rotor blade using an Ni-based forged alloy, to provide a manufacturing method of a turbine rotor blade having an excellent workability and a high degree of freedom in the design of a cooling structure.

Meanwhile, the above examples are explained concretely in order to help the present invention to be understood and the present invention does not necessarily have all the explained configurations. For example, a part of the configuration of a certain example can be replaced with the configuration of another example and the configuration of a certain example can be added to the configuration of another example. Further, a part of the configuration of each example can be deleted, replaced with another configuration, or added to another configuration.

### Reference Signs List

- 1, 41: First member
- 2, 42: Second member
- 3, 45: Joint
- 4, 31: γ phase
- 5, 33: γ' incoherent phase
- 32: γ' coherent phase
- 43: Joining part
- 44: Cooling structural part
- S1: Softening process
- S21: First working process
- S22: Second working process
- S23: Third working process
- S3: Solid solution and aging treatment process

## Claims

1. A manufacturing method of a turbine rotor blade, in a manufacturing method of a turbine rotor blade using an Ni-based forged alloy, comprising:
a softening process (S1) of increasing a γ' phase (5) incoherent with a γ phase (4) that is a matrix phase in the Ni-based forged alloy;
a first working process (S21) of forming at least two members (1, 2) constituting a rotor blade by using the Ni-based forged alloy after subjected to the softening process;
a second working process (S22) of forming cooling structural parts in the respective members; and
a third working process (S23) of joining the members by friction stir welding,
wherein the cooling structural parts in the respective members are formed in the second working process such that, after being joined in the third working process, they form together a cooling flow passage in the rotor blade.

2. A manufacturing method of a turbine rotor blade according to Claim 1, wherein the softening process (S1) comprises:
a hot forging process of being applied at a temperature of not higher than the solid solution temperature of a γ phase and not lower than a temperature at which the recrystallization of the γ phase advances rapidly and precipitating an γ' incoherent phase; and
a cooling process of applying slow cooling from a temperature of not lower than a hot-forging temperature and increasing the γ' incoherent phase.

3. A manufacturing method of a turbine rotor blade according to Claim 2, wherein:
the hot-forging temperature is not lower than 1,050°C to lower than 1,250°C; and
a cooling rate at the cooling process is not lower than 10°C/h to not higher than 50°C/h.

4. A manufacturing method of a turbine rotor blade according to any one of Claims 1 to 3, wherein at least one of the members is formed by machining at the first working process (S21).

5. A manufacturing method of a turbine rotor blade according to any one of Claims 1 to 4, wherein at least one of the members is formed by hot forging at the first working process (S21).

6. A manufacturing method of a turbine rotor blade according to any one of Claims 1 to 5, wherein the cooling structural part is formed in at least one of the members by drilling at the second working process (S22).

7. A manufacturing method of a turbine rotor blade according to any one of Claims 1 to 6, wherein the cooling structural part is formed in at least one of the members by electrical discharge machining at the second working process (S22).

8. A manufacturing method of a turbine rotor blade according to any one of Claims 1 to 7, further comprising a solid solution and aging treatment process (S3) after the third working process (S23).

9. A manufacturing method of a turbine rotor blade according to any one of Claims 1 to 8, wherein the Ni-based forged alloy comprises a γ' phase of not less than 10% to not more than 40% by mole at not lower than 1,050°C.

10. A manufacturing method of a turbine rotor blade according to Claim 8, wherein the Ni-based forged alloy after the solid solution and aging treatment process (S3) contains a γ' phase coherent with a matrix phase by not less than 30% by mole at not higher than 700°C.

11. A manufacturing method of a turbine rotor blade according to any one of Claims 1 to 10, wherein a joint of the members joined at the third working process (S23) has a forged structure.

12. A manufacturing method of a turbine rotor blade according to any one of Claims 1 to 11, wherein the members are members constituting the blade part and the apex part of the turbine rotor blade.

13. A manufacturing method of a turbine rotor blade according to any one of Claims 1 to 12, wherein the cooling structural parts constitute a cooling structure of the turbine rotor blade by joining the members at the third working process (S23).

## Patentansprüche

1. Herstellungsverfahren für eine Turbinenrotorschaufel, innerhalb eines Herstellungsverfahrens für eine Turbinenrotorschaufel unter Verwendung einer Ni-basierten geschmiedeten Legierung, umfassend:
einen Aufweichungsvorgang (S1), bei dem eine γ`-Phase (5), die mit einer γ-Phase (4) inkohärent ist, die eine Matrixphase in der Ni-basierten geschmiedeten Legierung ist, vergrößert wird;
einen ersten Bearbeitungsvorgang (S21), bei dem mindestens zwei eine Rotorschaufel bildende Elemente (1, 2) unter Verwendung der Ni-basierten geschmiedeten Legierung nach dem Unterziehen unter den Aufweichungsvorgang gebildet werden;
einen zweiten Bearbeitungsvorgang (S22), bei dem Kühlstrukturteile in den jeweiligen Elementen gebildet werden; und
einen dritten Bearbeitungsvorgang (S23), bei dem die Elemente durch Rührreibschweißen verbunden werden;
wobei die Kühlstrukturteile in den jeweiligen Elementen im zweiten Bearbeitungsvorgang so gebildet werden, dass sie, nachdem sie im dritten Bearbeitungsvorgang verbunden worden sind, zusammen eine Kühlungsströmungspassage in der Rotorschaufel bilden.

2. Herstellungsverfahren für eine Turbinenrotorschaufel nach Anspruch 1, wobei der Aufweichungsvorgang (S1) umfasst:
einen Heißschmiedevorgang, der bei einer Temperatur vorgenommen wird, die nicht höher als die Mischkristalltemperatur einer γ-Phase und nicht niedriger als eine Temperatur ist, bei der die Rekristallisierung der γ-Phase schnell fortschreitet und sich eine γ'-inkohärente Phase absetzt; und
einen Kühlvorgang, bei dem langsames Kühlen auf eine Temperatur vorgenommen wird, die nicht niedriger als eine Heißschmiedetemperatur ist, und die γ'-inkohärente Phase vergrößert wird.

3. Herstellungsverfahren einer Turbinenrotorschaufel nach Anspruch 2, wobei:
die Heißschmiedetemperatur nicht niedriger als 1.050°C bis niedriger als 1.250°C ist und
eine Kühlungsrate des Kühlvorgangs nicht niedriger als 10°C/h bis nicht höher als 50°C/h ist.

4. Herstellungsverfahren für eine Turbinenrotorschaufel nach einem der Ansprüche 1 bis 3, wobei mindestens eines der Elemente durch maschinelle Bearbeitung im ersten Bearbeitungsvorgang (S21) gebildet wird.

5. Herstellungsverfahren für eine Turbinenrotorschaufel nach einem der Ansprüche 1 bis 4, wobei mindestens eines der Elemente durch Heißschmieden im ersten Bearbeitungsvorgang (S21) gebildet wird.

6. Herstellungsverfahren für eine Turbinenrotorschaufel nach einem der Ansprüche 1 bis 5, wobei das Kühlstrukturteil im mindestens einem der Elemente durch Bohren im zweiten Bearbeitungsvorgang (S22) gebildet wird.

7. Herstellungsverfahren für eine Turbinenrotorschaufel nach einem der Ansprüche 1 bis 6, wobei das Kühlstrukturteil in mindestens einem der Elemente durch maschinelle Bearbeitung mit elektrischer Entladung im zweiten Bearbeitungsvorgang (S22) gebildet wird.

8. Herstellungsverfahren für eine Turbinenrotorschaufel nach einem der Ansprüche 1 bis 7, ferner umfassend einen Mischkristall- und Alterungsbearbeitungsvorgang (S3) nach dem dritten Bearbeitungsvorgang (S23).

9. Herstellungsverfahren für eine Turbinenrotorschaufel nach einem der Ansprüche 1 bis 8, wobei die Ni-basierte geschmiedete Legierung eine γ`-Phase von nicht weniger als 10% bis nicht mehr als 40% bezüglich Mol bei nicht unterhalb von 1.050°C umfasst.

10. Herstellungsverfahren für eine Turbinenrotorschaufel nach Anspruch 8, wobei die Ni-basierte geschmiedete Legierung nach dem Mischkristall- und Alterungsbehandlungsvorgang (S3) eine mit einer Matrixphase kohärente γ`-Phase bei nicht weniger als 30% bezüglich Mol bei nicht oberhalb von 700°C enthält.

11. Herstellungsverfahren für eine Turbinenrotorschaufel nach einem der Ansprüche 1 bis 10, wobei eine Verbindung der im dritten Bearbeitungsvorgang (S23) verbundenen Elemente eine geschmiedete Struktur aufweist.

12. Herstellungsverfahren für eine Turbinenrotorschaufel nach einem der Ansprüche 1 bis 11, wobei die Elemente solche sind, die das Schaufelteil und das Spitzenteil der Turbinenrotorschaufel bilden.

13. Herstellungsverfahren für eine Turbinenrotorschaufel nach einem der Ansprüche 1 bis 12, wobei die Kühlstrukturteile eine Kühlstruktur der Turbinenrotorschaufel bilden, indem die Elemente im dritten Bearbeitungsvorgang (S23) verbunden werden.

## Revendications

1. Procédé de fabrication d'une aube de rotor de turbine, dans un procédé de fabrication d'une aube de rotor de turbine utilisant un alliage forgé à base de Ni, comprenant :
un processus de ramollissement (S1) pour accroître une phase γ' (5) incohérente avec une phase γ (4) qui est une phase matricielle dans l'alliage forgé à base de Ni ;
un premier processus de travail (S21) pour former au moins deux éléments (1, 2) constituant une aube de rotor en utilisant l'alliage forgé à base de Ni après qu'il a été soumis au processus de ramollissement ;
un deuxième processus de travail (S22) pour former des parties structurelles de refroidissement dans les éléments respectifs ; et
un troisième processus de travail (S23) pour joindre les éléments par soudage par friction-malaxage,
dans lequel les parties structurelles de refroidissement dans les éléments respectifs sont formées dans le deuxième processus de travail de telle manière que, après avoir été jointes dans le troisième processus de travail, elles forment ensemble un passage de flux de refroidissement dans l'aube de rotor.

2. Procédé de fabrication d'une aube de rotor de turbine selon la revendication 1, dans lequel le processus de ramollissement (S1) comprend :
un processus de forgeage à chaud pour être appliqué à une température non supérieure à la température de solution solide d'une phase γ et non inférieure à une température à laquelle la recristallisation de la phase γ avance rapidement et précipitant une phase γ' incohérente ; et
un processus de refroidissement pour appliquer un refroidissement lent depuis une température non inférieure à une température de forgeage à chaud et augmentant la phase γ' incohérente.

3. Procédé de fabrication d'une aube de rotor de turbine selon la revendication 2, dans lequel :
la température de forgeage à chaud est de non inférieure à 1 050°C à inférieure à 1 250°C ; et
une vitesse de refroidissement lors du processus de refroidissement est de non inférieure à 10°C/h à non supérieure à 50°C/h.

4. Procédé de fabrication d'une aube de rotor de turbine selon l'une quelconque des revendications 1 à 3, dans lequel au moins un des éléments est formé par usinage lors du premier processus de travail (S21).

5. Procédé de fabrication d'une aube de rotor de turbine selon l'une quelconque des revendications 1 à 4, dans lequel au moins un des éléments est formé par forgeage à chaud lors du premier processus de travail (S21).

6. Procédé de fabrication d'une aube de rotor de turbine selon l'une quelconque des revendications 1 à 5, dans lequel la partie structurelle de refroidissement est formée dans au moins un des éléments par perçage lors du deuxième processus de travail (S22).

7. Procédé de fabrication d'une aube de rotor de turbine selon l'une quelconque des revendications 1 à 6, dans lequel la partie structurelle de refroidissement est formée dans au moins un des éléments par usinage par décharge électrique lors du deuxième processus de travail (S22).

8. Procédé de fabrication d'une aube de rotor de turbine selon l'une quelconque des revendications 1 à 7, comprenant en outre un processus de traitement de solution solide et de vieillissement (S3) après le troisième processus de travail (S23).

9. Procédé de fabrication d'une aube de rotor de turbine selon l'une quelconque des revendications 1 à 8, dans lequel l'alliage forgé à base de Ni comprend une phase γ' de pas moins de 10% à pas plus de 40% en moles à pas moins de 1 050°C.

10. Procédé de fabrication d'une aube de rotor de turbine selon la revendication 8, dans lequel l'alliage forgé à base de Ni après le processus de traitement de solution solide et de vieillissement (S3) comprend une phase γ' cohérente avec une phase matricielle à pas moins de 30% en moles à pas plus de 700°C.

11. Procédé de fabrication d'une aube de rotor de turbine selon l'une quelconque des revendications 1 à 10, dans lequel une jonction des éléments joints lors du troisième processus de travail (S23) a une structure forgée.

12. Procédé de fabrication d'une aube de rotor de turbine selon l'une quelconque des revendications 1 à 11, dans lequel les éléments sont des éléments constituant la partie d'aube et la partie de sommet de l'aube de rotor de turbine.

13. Procédé de fabrication d'une aube de rotor de turbine selon l'une quelconque des revendications 1 à 12, dans lequel les parties structurelles de refroidissement constituent une structure de refroidissement de l'aube de rotor de turbine par jonction des éléments lors du troisième processus de travail (S23).
